# EUROPÄISCHE PATENTANMELDUNG

(11) **EP 4 276 300 A1**
(43) Veröffentlichungstag der Anmeldung: **15.11.2023**
(21) Anmeldenummer: 22173045.0
(22) Anmeldetag: 12.05.2022
(51) Int. Cl.: F03D 1/06, F03D 80/40

(54) **WINDENERGIEANLAGEN-ROTORBLATT UND WINDENERGIEANLAGE**

(71) Anmelder: Wobben Properties GmbH, 26607 Aurich (DE)
(72) Erfinder: Mahmoud, Muhanad, 26605 Aurich (DE); Stemberg, Jochen, 26607 Aurich (DE); Daboul, Hussam, 26624 Südbrookmerland (DE)
(74) Vertreter: Eisenführ Speiser

(57) **Zusammenfassung**

Es wird ein Windenergieanlagen-Rotorblatt (200) mit einer Länge (201), einer Rotorblattwurzel (210), einer Rotorblattspitze (220), einer Druckseite (250), einer Saugseite (260), einer Vorderkante (230), einer Hinterkante (240), einer Rotorblatttiefe (270), einer Rotorblattdicke (280) und einer Luftführung (400) für erwärmte Luft zum Führen von erwärmter Luft entlang einer Längsrichtung (L) des Rotorblattes (200) von der Rotorblattwurzel (210) in Richtung der Rotorblattspitze (220) vorgesehen. Ferner weist das Windenergieanlagen-Rotorblatt (200) einen Umlenkabschnitt (500) auf, der im Bereich der Rotorblattspitze (202) angeordnet ist und eine Querschnittsfläche aufweist, die zumindest abschnittsweise zur Rotorblattspitze (220) hin zumindest konstant ist oder die sich zumindest abschnittsweise zur Rotorblattspitze (220) hin vergrößert.

## Beschreibung

Die vorliegende Erfindung betrifft ein Windenergieanlagen-Rotorblatt und eine Windenergieanlage.

Da Rotorblätter einer Windenergieanlage ungeschützt allen Witterungsbedingungen ausgesetzt sind, kann es bei bestimmten Temperaturen zu einer Vereisung der Rotorblätter kommen. Um dies zu verhindern, kann eine Rotorblattheizung verwendet werden. Hierbei kann entweder eine Heizung außen am Rotorblatt vorgesehen werden oder erwärmte Luft kann innerhalb des Rotorblattes bereitgestellt werden. Dies kann beispielsweise mittels eines Heizregisters erfolgen, das warme Luft erzeugt, welche dann in das Innere des Rotorblattes geblasen wird.

WO 2017/021350 A1 zeigt ein Windenergieanlagen-Rotorblatt mit einem Rotorblattwurzelbereich und einem Rotorblattspitzenbereich sowie einer Rotorblattheizung. Ferner ist mindestens ein Steg entlang einer Längsachse des Rotorblattes vorgesehen. An dem Steg kann eine Umlenkeinheit in Form eines Stegtropfens vorgesehen sein, um eine Verwirbelung der Luft beim Umlenken zu reduzieren.

WO 2018/211055 zeigt ein Windenergieanlagen-Rotorblatt mit einer Rotorblattheizung. Das Rotorblatt weist einen Steg und eine Umlenkeinheit im Bereich der Rotorblattspitze zum Umlenken von erwärmter Luft auf.

Es ist eine Aufgabe der vorliegenden Erfindung, ein Windenergieanlagen-Rotorblatt vorzusehen, welches eine verbesserte Beheizung des Rotorblatts ermöglicht.

Diese Aufgabe wird durch ein Windenergieanlagen-Rotorblatt nach Anspruch 1 gelöst.

Somit wird ein Windenergieanlagen-Rotorblatt mit einer Rotorblattwurzel, einer Rotorblattspitze, einer Druckseite, einer Saugseite, einer Vorderkante und einer Hinterkante vorgesehen. Das Rotorblatt weist eine Längsrichtung auf. Mittels einer Rotorblattheizung wird warme Luft erzeugt, welche dann in das Innere des Rotorblattes geblasen wird. Optional ist mindestens ein Steg zwischen der Druckseite und der Saugseite entlang der Längsrichtung des Rotorblattes vorgesehen. Die von der Rotorblattheizung erwärmte Luft kann entlang des Steges in Richtung der Rotorblattspitze geblasen werden, wo sie umgelenkt wird, so dass die erwärmte Luft auf der anderen Seite des Steges zurück von dem Rotorblattspitzenbereich zu dem Rotorblattwurzelbereich strömen kann.

Im Bereich der Rotorblattspitze wird eine Vergrößerung der Querschnittsfläche vorgesehen, welche im Umlenkbereich zum Umlenken der erwärmten Luft vorgesehen sein kann. Alternativ dazu kann die Querschnittsfläche im Bereich eines Umlenkabschnitts in Richtung der Rotorblattspitze zumindest abschnittsweise konstant gehalten werden.

Der Querschnitt oder die Querschnittsfläche gemäß der Erfindung stellt den für eine Luftströmung zur Verfügung stehenden effektiven (Innen)Querschnitt dar.

Gemäß einem Aspekt der vorliegenden Erfindung wird im Bereich der Rotorblattspitze ein Umlenkabschnitt vorgesehen, dessen innere Querschnittsfläche (welche die freie Fläche für die Luftströmung bildet) größer ist als in den benachbarten Abschnitten (in Richtung der Rotorblattwurzel sowie in Richtung der Rotorblattspitze). Dies ist vorteilhaft, weil damit die mit einer Umlenkung der Luftströmung einhergehenden Druckverluste reduziert werden können.

Dieser Umlenkabschnitt mit vergrößertem Querschnitt (insbesondere vergrößerter Innenquerschnitt) kann durch Vergrößerung der Blatttiefe, der Profildicke sowie eine Kombination davon erreicht werden.

Gemäß einem weiteren Aspekt kann der Umlenkabschnitt erreicht werden, indem ein Abschnitt mit einem konstanten Blatttiefenverlauf in Richtung der Längsrichtung des Rotorblattes und in Richtung der Rotorblattspitze vorgesehen ist. Im Gegensatz dazu nimmt die Blatttiefe beim Stand der Technik in Richtung der Rotorblattspitze kontinuierlich ab. Somit kann gemäß einem Aspekt der Erfindung ein Abschnitt vorgesehen werden, bei welchem die Blatttiefe in Richtung der Rotorblattspitze nicht kontinuierlich abnimmt. Ferner kann ein Abschnitt vorgesehen werden, bei welchem die Rotorblatttiefe in Richtung der Rotorblattspitze zumindest abschnittsweise zumindest konstant gehalten oder erhöht wird.

Alternativ oder zusätzlich dazu kann die Rotorblattdicke in Richtung der Rotorblattspitze nicht kontinuierlich abnehmen, wie dies bei einem klassischen Rotorblatt gemäß dem Stand der Technik der Fall ist. Vielmehr kann ein Umlenkabschnitt vorhanden sein, bei welchem die Rotorblattdicke nicht als Funktion der Länge des Rotorblattes abnimmt, sondern zumindest teilweise zunimmt. Alternativ dazu kann die Profildicke des Rotorblattes entlang der Länge des Rotorblattes zumindest abschnittsweise konstant sein.

Gemäß einem Aspekt der vorliegenden Erfindung ist ebenfalls eine hybride Lösung möglich, wobei sowohl die Blatttiefe als auch die Blattdicke in Richtung der Rotorblattspitze zumindest abschnittsweise konstant bleibt.

Gemäß einem weiteren Aspekt der vorliegenden Erfindung kann die Rotorblatttiefe und/oder die Rotorblattdicke in Richtung zur Rotorblattspitze zumindest abschnittsweise zunehmen.

Mit dem Rotorblatt (z. B. durch Vergrößerung des zur Verfügung stehenden Strömungsquerschnitts im Bereich der Rotorblattspitze) können Druckverluste in der Luftströmung, welche zur Beheizung des Rotorblattes verwendet wird, erheblich reduziert werden. Ferner können hierbei die Strömungsgeschwindigkeiten der Luftströmung (insbesondere im Umlenkbereich) reduziert werden. Des Weiteren können Wandreibungsverluste (insbesondere im Umlenkbereich) minimiert werden. Dies kann dazu führen, dass die effektive Leistung der Blattheizung erhöht wird, ohne dass hierbei die elektrische Leistung der Blattheizung erhöht werden muss.

Gemäß einem Aspekt der vorliegenden Erfindung kann eine Vergrößerung des Strömungsquerschnitts im Bereich der Rotorblattspitze dazu führen, dass der Bau- und Installationsraum insbesondere für Luftleitelemente z. B. zum Umlenken des Luftstroms im Bereich der Rotorblattspitze vergrößert wird. Diese Luftleitelemente können dazu dienen, eine widerstandsoptimierte Strömungsumlenkung um 180° im Bereich der Rotorblattspitze zu implementieren. Somit kann die von der Rotorblattheizung entlang eines Steges in Richtung der Rotorblattspitze geleitete Luft widerstandsoptimiert zur Rotorblattwurzel hin zurückströmen. Damit kann der Wärmetransport der Rotorblattheizung auch im äußeren Rotorblattbereich (d. h. im Bereich der Rotorblattspitze) verbessert werden.

Gemäß einem Aspekt der Erfindung ist mindestens ein Abschnitt mit vergrößertem Querschnitt zwischen der Rotorblattwurzel und der Rotorblattspitze vorgesehen.

Gemäß einem Aspekt der Erfindung weist der Abschnitt mit vergrößertem Querschnitt eine Länge von bis zu 10% der Länge des Rotorblattes auf.

Gemäß einem Aspekt der Erfindung stellt der Bereich der Rotorblattspitze einen äußeren Bereich des Rotorblattes mit einer Länge von 10 bis 30 % der Länge des Rotorblattes dar.

Gemäß einem Aspekt der Erfindung entspricht eine Länge des Umlenkabschnittes bis zu 30 % der Länge des Rotorblattes oder bis zu 15 % des Rotordurchmessers.

Weitere Ausgestaltungen der Erfindung sind Gegenstand der Unteransprüche.

Vorteile und Ausführungsbeispiele der Erfindung werden nachstehend unter Bezugnahme auf die Zeichnung näher erläutert.
- Fig. 1: zeigt eine schematische Darstellung einer Windenergieanlage gemäß der Erfindung,
- Fig. 2: zeigt eine schematische abschnittsweise Darstellung des Rotorblattes der Windenergieanlage von Fig. 1,
- Fig. 3A: zeigt eine schematische Darstellung einer Rotorblattspitze gemäß dem Stand der Technik,
- Fig. 3B: zeigt eine schematische Darstellung einer Rotorblattspitze gemäß einem Aspekt der vorliegenden Erfindung,
- Fig. 3C: zeigt eine schematische Darstellung einer Rotorblattspitze gemäß einem weiteren Aspekt der vorliegenden Erfindung,
- Fig. 4A: zeigt eine schematische Darstellung einer Rotorblattspitze gemäß dem Stand der Technik,
- Fig. 4B: zeigt eine schematische Darstellung einer Rotorblattspitze gemäß einem Aspekt der vorliegenden Erfindung,
- Fig. 4C: zeigt eine schematische Darstellung einer Rotorblattspitze gemäß einem weiteren Aspekt der vorliegenden Erfindung,
- Fig. 5A: zeigt eine schematische Darstellung einer Rotorblattspitze gemäß einem Aspekt der vorliegenden Erfindung,
- Fig. 5B: zeigt eine schematische Darstellung einer Rotorblattspitze gemäß einem weiteren Aspekt der vorliegenden Erfindung,
- Fig. 6A: zeigt eine schematische Darstellung eines Tiefenverlaufes eines Rotorblattes gemäß dem Stand der Technik,
- Fig. 6B: zeigt eine schematische Darstellung eines Tiefenverlaufes eines Rotorblattes gemäß einem Aspekt der vorliegenden Erfindung,
- Fig. 7A: zeigt eine schematische Darstellung einer Profildicke einer Rotorblattspitze gemäß dem Stand der Technik, und
- Fig. 7B: zeigt eine schematische Darstellung eines Verlaufs einer Profildicke einer Rotorblattspitze gemäß einem Aspekt der vorliegenden Erfindung.

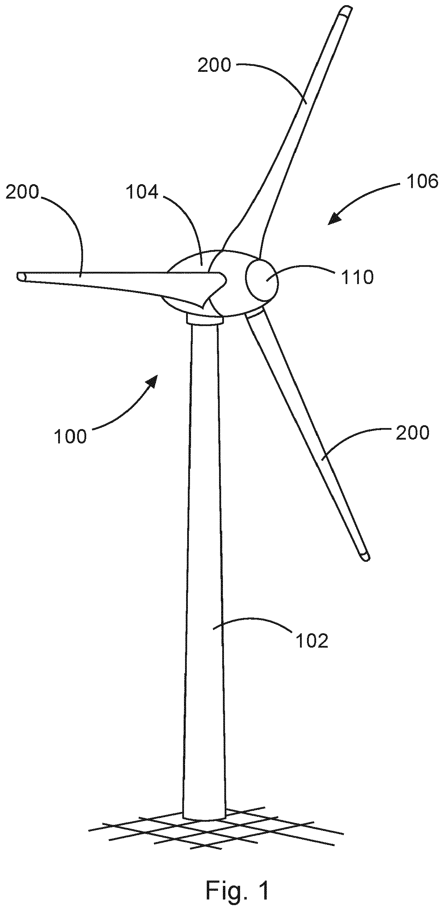

Fig. 1 zeigt eine schematische Darstellung einer Windenergieanlage gemäß der Erfindung. Die Windenergieanlage 100 weist einen Turm 102 und eine Gondel 104 auf dem Turm 102 auf. An der Gondel 104 ist ein aerodynamischer Rotor 106 mit drei Rotorblättern 200 und einem Spinner 110 vorgesehen. Der aerodynamische Rotor 106 wird im Betrieb der Windenergieanlage durch den Wind in eine Drehbewegung versetzt und dreht somit auch einen Rotor oder Läufer eines Generators, welcher direkt oder indirekt mit dem aerodynamischen Rotor 106 gekoppelt ist. Der elektrische Generator ist in der Gondel angeordnet und erzeugt elektrische Energie. Die Pitchwinkel der Rotorblätter 200 können durch Pitchmotoren an den Rotorblattwurzeln 210 der jeweiligen Rotorblätter 200 verändert werden.

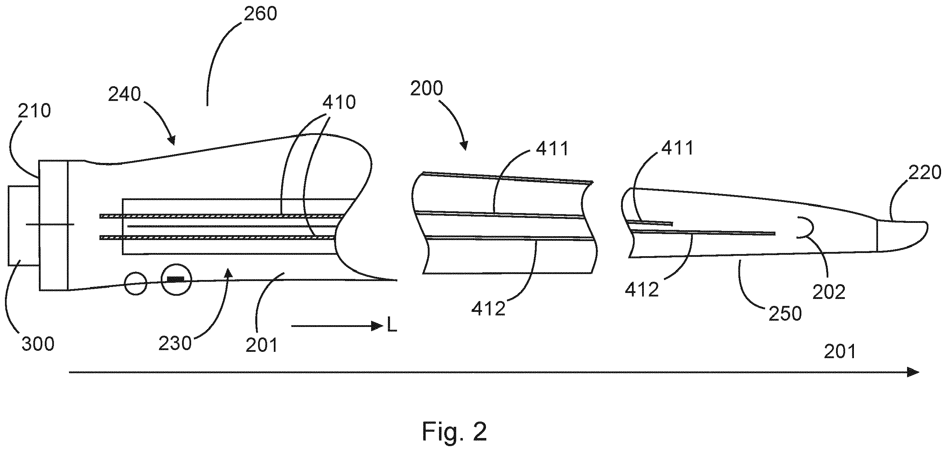

Fig. 2 zeigt eine schematische abschnittsweise Darstellung des Rotorblattes der Windenergieanlage von Fig. 1. Das Rotorblatt 200 weist eine Länge 201, eine Rotorblattwurzel 210, eine Rotorblattspitze 220, eine Vorderkante 230, eine Hinterkante 240, eine Druckseite 250 und eine Saugseite 260 auf. Innerhalb des Rotorblattes 200 ist eine Luftführung 400 vorgesehen, welche beispielsweise als ein Steg 410 ausgestaltet sein kann. Eine Rotorblattheizung 300 kann im Bereich der Rotorblattwurzel 210 vorgesehen sein. Die Rotorblattheizung 300 kann einen Lüfter und eine Heizeinheit aufweisen und warme Luft erzeugen, die in das Innere des Rotorblattes 200 geleitet werden kann.

Entlang einer Längsrichtung L des Rotorblattes 200 erstreckt sich innerhalb des Rotorblattes mindestens ein Steg 410, 411, 412, der Teil der Luftführung 400 ist bzw. der aus anderen Gründen bereits vorhanden ist und die Luftführung 400 lediglich eine sekundäre Funktion darstellt. Optional kann mehr als ein Steg vorgesehen sein.

Die durch die Rotorblattheizung 300 erwärmte Luft kann entlang des Steges 411 - als Teil der Luftführung 400 - in Richtung der Rotorblattspitze 220 geführt und dann im Bereich der Rotorblattspitze 220 umgelenkt werden. Damit ist ein Umlenkabschnitt 202 im Bereich der Rotorblattspitze 220 vorhanden. Optional kann die Rotorblattspitze 220 zumindest teilweise hohl ausgestaltet sein, so dass ein Teil der erwärmten Luft durch die Rotorblattspitze strömen kann, um auch die Rotorblattspitze 220 zu enteisen.

Die erwärmte Luft kann mittels der Rotorblattheizung 300 entweder im Rotorblattwurzelbereich erzeugt werden, indem die Luft mittels einer Heizeinheit erwärmt wird, oder die erwärmte Luft wird dem Rotorblatt 200 im Bereich der Rotorblattwurzel zugeführt.

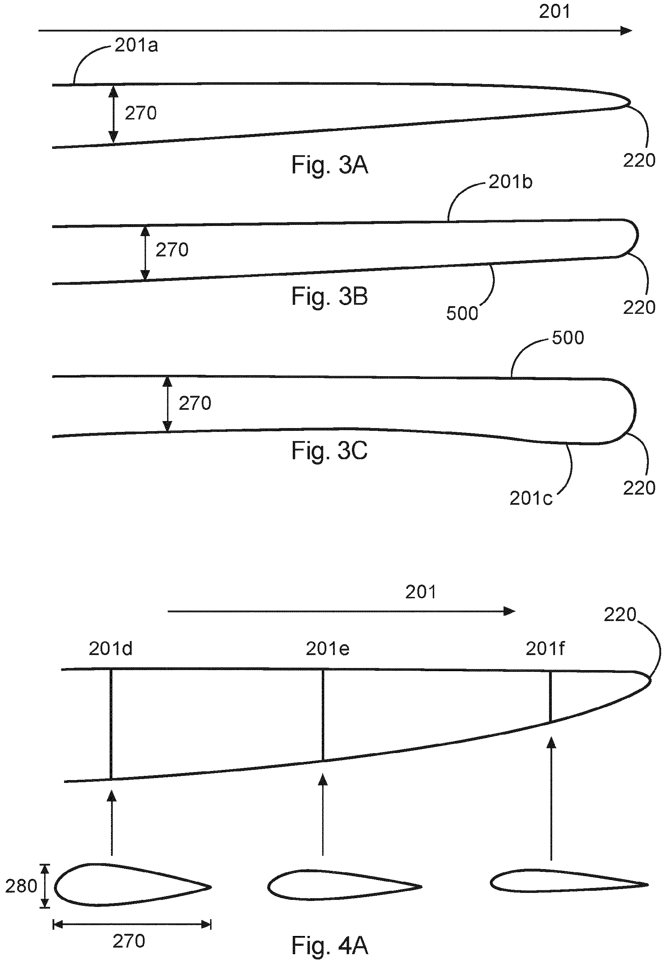

Fig. 3A zeigt eine schematische Darstellung einer Rotorblattspitze gemäß dem Stand der Technik, und Fig. 3B zeigt eine schematische Darstellung einer Rotorblattspitze gemäß einem Aspekt der vorliegenden Erfindung. Fig. 3C zeigt eine schematische Darstellung einer Rotorblattspitze gemäß einem weiteren Aspekt der vorliegenden Erfindung.

In Fig. 3A ist ein Rotorblatt gemäß dem Stand der Technik gezeigt, dessen Rotorblatttiefe 270 mit zunehmender Länge 201 des Rotorblatts zur Rotorblattspitze 220 hin kontinuierlich abnimmt.

In Fig. 3B ist ein Blatttiefenverlauf im Bereich der Rotorblattspitze dargestellt. Entgegen der kontinuierlich abnehmenden Rotorblatttiefe gemäß dem Stand der Technik von Fig. 3A (kontinuierliche Abnahme der Rotorblatttiefe mit zunehmender Länge des Rotorblattes) weist die Rotorblatttiefe 270 gemäß Fig. 3B zumindest abschnittsweise einen konstanten Wert für die Rotorblatttiefe bei zunehmender Länge 201 der Rotorblätter 200 auf. Somit wird der Umkehrabschnitt 500 gemäß dem Ausführungsbeispiel von Fig. 3B als ein Abschnitt mit konstanter Rotorblatttiefe bei zunehmender Länge des Rotorblattes implementiert. In dem Umkehrabschnitt 500 kann ein Luftleitelement 202 vorgesehen sein.

Gemäß Fig. 3C ist im Bereich der Rotorblattspitze 220 ebenfalls ein Umkehrabschnitt 500 vorgesehen. Dieser Umkehrabschnitt 500 weist mit zunehmender Länge 201 eine größere Rotorblatttiefe 270 auf, bevor die Rotorblatttiefe an der Rotorblattspitze 220 reduziert wird.

Die Blatttiefe 270 an der Stelle 201c kann damit größer als bei einer kleineren Länge 201 sein.

Gemäß den oben beschriebenen Ausführungsbeispielen kann das Vorsehen des Umkehrabschnittes 500 mit veränderter Rotorblatttiefe dazu führen, dass es zu einer aerodynamischen Beeinflussung kommt. Diese aerodynamische Beeinflussung im Bereich der Rotorblattspitze (hohe Induktion in der Stromröhre des Rotors) kann beispielsweise durch antriebsschwache Rotorblattprofile ausgeglichen werden. Alternativ oder zusätzlich dazu kann eine Verwindung des Rotorblattes angepasst werden. Hierbei kann insbesondere die Blattsektion zu kleineren Anstellwinkeln hin verwunden werden, so dass nur geringe Auftriebe und damit eine geringere Induktion entsteht.

Fig. 4A zeigt eine schematische Darstellung einer Rotorblattspitze gemäß dem Stand der Technik. Entlang einer Länge 201 des Rotorblattes verändert sich der Querschnitt des Rotorblattes. In Fig. 4A sind drei verschiedene Querschnitte bei den Längen 201d, 201e und 201f dargestellt. Hierbei verändert sich sowohl die Rotorblatttiefe 270 als auch die Rotorblattdicke. Die Rotorblatttiefe und die Rotorblattdicke werden mit zunehmender Länge 201 des Rotorblattes 200 reduziert.

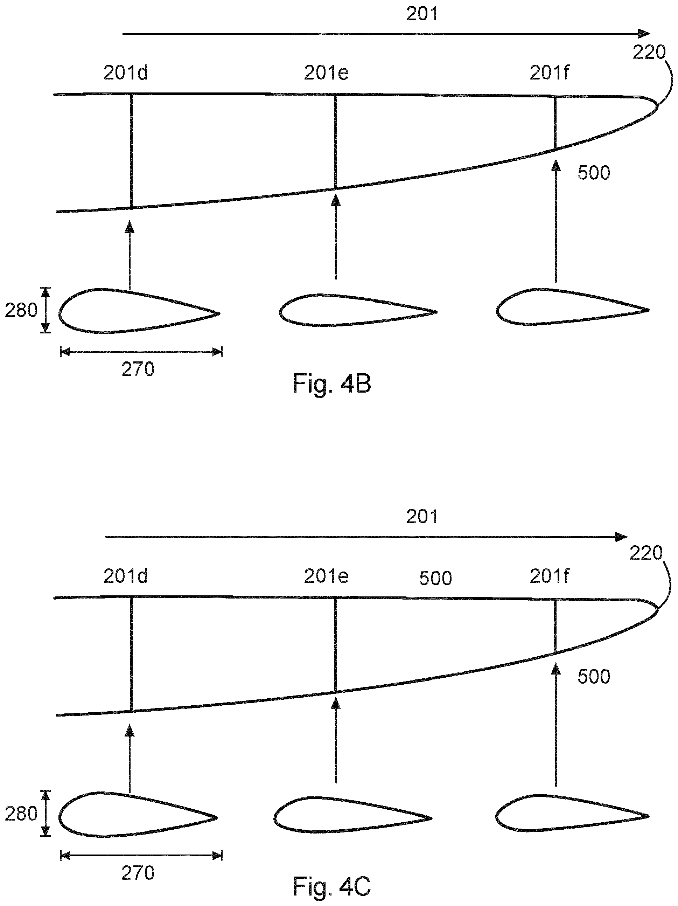

Fig. 4B zeigt eine schematische Darstellung einer Rotorblattspitze gemäß einem Aspekt der vorliegenden Erfindung. Im Gegensatz zu dem in Fig. 4A gezeigten Rotorblattverlaufes ist die Rotorblattdicke 280 an der Länge 201e kleiner als bei einer Länge 201f, welche näher an der Rotorblattspitze 220 angeordnet ist. Die Rotorblattdicke 280 ist somit in einem Bereich, welcher näher an der Rotorblattspitze 220 ist, größer als in einem Bereich, welcher weiter weg von der Rotorblattspitze ist. Somit ist ein Rotorblattabschnitt bei einer Länge 201e vorhanden, welcher kleiner ist als bei einer Länge 201d und einer Länge 201f. Damit ist ein Abschnitt 500 (Umlenkabschnitt) im Bereich der Länge 201f vorgesehen, welcher einen größeren Querschnitt aufweist als bei einer Länge, die weiter weg von der Rotorblattspitze 220 angeordnet ist.

Damit weist der Verlauf der relativen Profildicke im Bereich der Rotorblattspitze ein lokales Minimum bei einer Länge von 201e auf. Die relative Profildicke nimmt dann in Richtung der Blattspitze wieder zu (bei einer Länge 201f). Gemäß einem Aspekt der Erfindung kann die relative Profildicke ein Minimum aufweisen, während die absolute Profildicke konstant bleibt oder sogar streng monoton abfällt. Es kann aber auch der Fall sein, dass sowohl absolute als auch relative Profildicke beide ein Minimum aufweisen. In jedem Fall aber weist die relative Profildicke ein Minimum auf.

Fig. 4C zeigt eine schematische Darstellung einer Rotorblattspitze gemäß einem weiteren Aspekt der vorliegenden Erfindung. In Fig. 3C ist die Rotorblattspitze sowie drei Querschnitte an den Positionen 201d, 201e und 201f gezeigt. Gemäß einem Aspekt der vorliegenden Erfindung ist zwischen der Position 201e und 201f ein Abschnitt 500 (Umlenkabschnitt) vorgesehen, welcher eine im Wesentlichen konstante relative Profildicke 280 aufweist. Mit anderen Worten, die Rotorblattdicke 280 des Querschnitts bei der Länge 201f entspricht im Wesentlichen der Rotorblattdicke 280 bei der Länge 201e. Gemäß einem Aspekt der Erfindung kann die Rotorblattdicke durch das Vorgehen, die relative Profildicke nach außen hin nicht weiter zu reduzieren, größer gehalten werden. Das bedeutet aber nicht zwangsläufig, dass die Rotorblattdicke konstant bleibt. Sie kann auch nach außen hin abnehmen. Nur nimmt sie weniger stark ab als bei einem Entwurf mit nach außen hin konstant abnehmender relativer Profildicke.

Optional wird die Rotorblatttiefe des Rotorblattes nicht verändert, d. h. die Rotorblatttiefe weicht nicht von der Grundform ab.

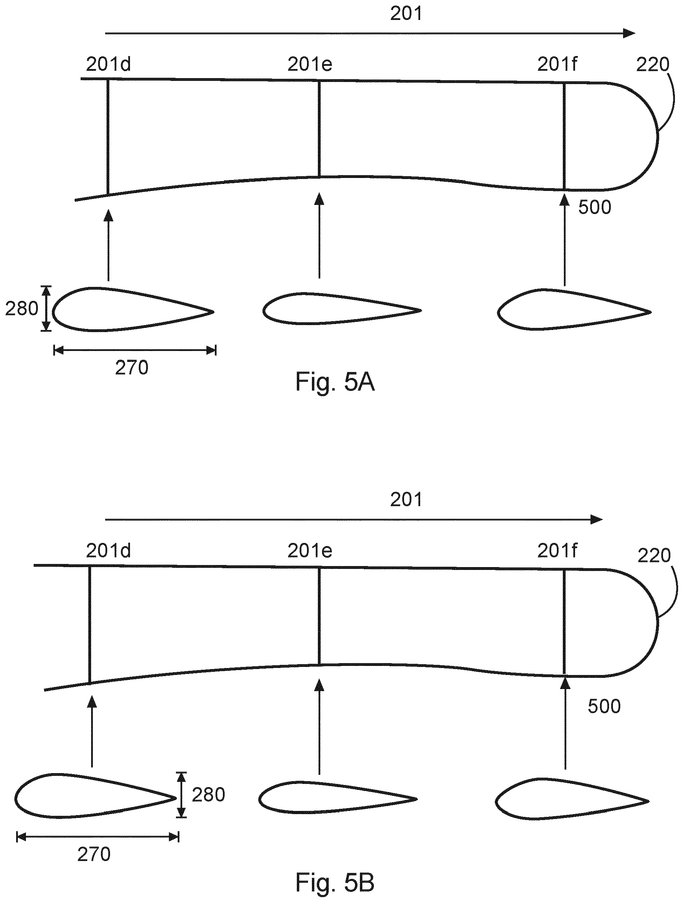

Fig. 5A zeigt eine schematische Darstellung einer Rotorblattspitze gemäß einem Aspekt der vorliegenden Erfindung. Entlang der Länge 201 des Rotorblattes - im Bereich der Rotorblattspitze 220 - kann im Bereich der Länge 201a die Rotorblatttiefe 270 geringer sein als bei der Länge 201f (welche näher an der Rotorblattspitze 220 ist). In Fig. 5A kann insbesondere eine Hybridlösung gezeigt werden. Das Rotorblatt 200 kann hierbei eine konstante, relativ hohe Blattdicke 280 aufweisen und eine zur Spitze 220 zunehmende Blatttiefe 270. Optional kann die absolute Blattdicke nach außen hin zunehmen. Beispielsweise kann somit die Blattdicke 280 an der Position 201e der Blattdicke 280 an der Position 201f entsprechen. Ferner kann die Rotorblatttiefe 270 an der Länge 201f größer sein als an der Länge 201e, welche weiter von der Rotorblattspitze entfernt sein kann.

Somit kann im Bereich der Länge 201f ein Umlenkabschnitt 500 mit einem vergrößerten effektiven Querschnitt (d. h. Innenquerschnitt) vorgesehen sein.

Fig. 5B zeigt eine schematische Darstellung eines Rotorblattes gemäß einem Aspekt der vorliegenden Erfindung. In Fig. 5B ist eine weitere Hybridlösung zur Ausgestaltung des Umlenkabschnitts 500 dargestellt. Die Profildicke nimmt in Richtung der Rotorblattspitze beispielsweise von einer Länge 201e zu einer Länge 201f zu, während die Rotorblatttiefe 270 ebenfalls zunimmt. Mit anderen Worten, sowohl die Rotorblattdicke als auch die Rotorblatttiefe nimmt in Richtung der Rotorblattspitze zu. Somit wird ein Umlenkabschnitt 500 im Bereich der Länge 201f des Rotorblattes 200 vorgesehen.

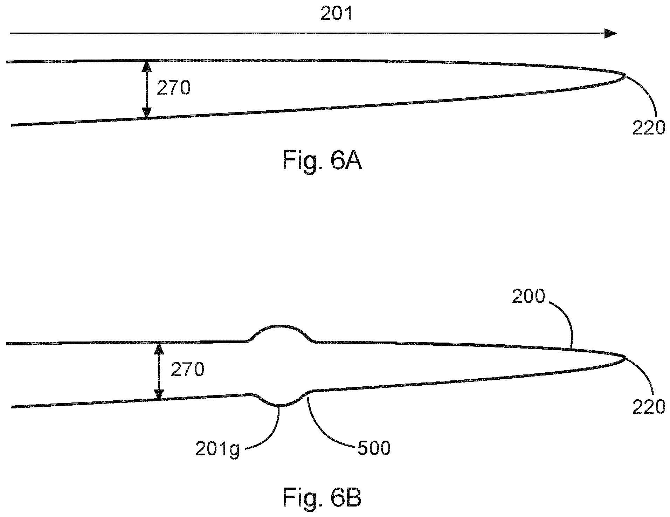

Fig. 6A zeigt eine schematische Darstellung eines Blatttiefenverlaufs eines Rotorblattes gemäß dem Stand der Technik. Fig. 6B zeigt eine entsprechende Darstellung gemäß einem Aspekt der vorliegenden Erfindung. In dem Rotorblatt 200 von Fig. 6B ist ein Abschnitt 500 bei einer Länge von 201g vorgesehen, der abschnittsweise eine größere Blatttiefe 270 aufweist. Durch die größere Blatttiefe 270 kann ein Querschnitt des Rotorblattes 200 vergrößert werden. Alternativ dazu kann die Blattdicke 280 abschnittsweise erhöht werden. Gemäß einem weiteren Aspekt kann sowohl die Blattdicke 280 als auch die Blatttiefe 270 in dem Abschnitt 500 vergrößert sein.

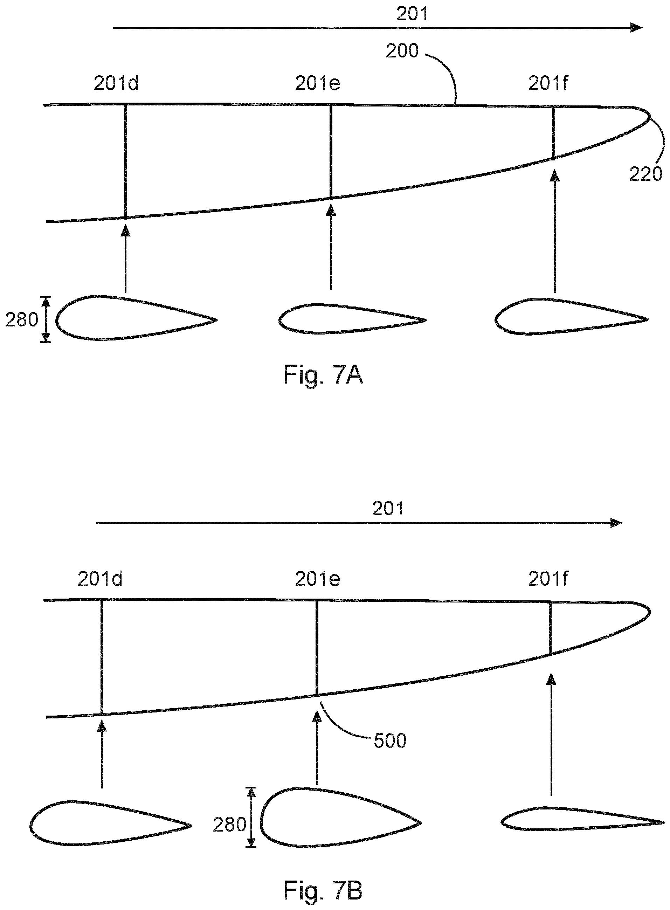

Fig. 7A zeigt eine schematische Darstellung einer Profildicke eines Rotorblattes gemäß dem Stand der Technik und Fig. 7B zeigt eine schematische Darstellung eines Profildickenverlaufs gemäß einem Aspekt der vorliegenden Erfindung. In Fig. 7B ist die Profildicke 280 bei der Länge 201e vergrößert, so dass eine lokale Aufdickung vorgesehen sein kann, um den Abschnitt 500 implementieren zu können, wobei der Abschnitt 500 einen größeren strömungsrelevanten Querschnitt aufweist.

Gemäß einem weiteren Aspekt der vorliegenden Erfindung kann ebenfalls im Bereich des Rotorblattes zwischen der Rotorblattwurzel und der Rotorblattspitze weitere Abschnitte mit vergrößertem Strömungsquerschnitt implementiert werden, um Luftleitelemente in diesen Bereich einsetzen zu können. Zur Vergrößerung des Strömungsquerschnitts kann die Rotorblatttiefe und/oder die Rotorblattprofildicke abschnittsweise erhöht werden. Die Strömungsleitelemente bzw. Strömungskontrollelemente können Bypässe, Umlenkbögen oder Leitbleche darstellen.

Mit dem erfindungsgemäßen Rotorblatt kann eine Optimierung einer Luftführung bzw. Luftströmung bei einer heißluftbasierten Rotorblattheizung im Inneren des Rotorblattes ermöglicht werden. Durch die Vergrößerung des Strömungsquerschnittes können Druckverluste im Inneren des Rotorblattes vermieden werden. Mit dem erfindungsgemäßen Rotorblatt kann die Effizienz einer Heißluftblattheizung gesteigert werden. Durch das Vorsehen der Abschnitte mit vergrößertem Strömungsquerschnitt insbesondere im Bereich der Rotorblattspitze können die Strömungsgeschwindigkeiten im Bereich einer Umlenkung sowie eine Reduktion der Wandreibung erreicht werden.

Sowohl die Rotorblattdicke 280 als auch die Profildicke 290 ändern sich typischerweise entlang der Länge 201 des Rotorblattes. Typischerweise verringert sich die Rotorblattdicke 280 und die Profildicke 290 zum Bereich der Rotorblattspitze 220 hin. Diese Änderungen sind sowohl aerodynamisch als auch fertigungstechnisch bedingt. Die vorliegende Erfindung schlägt vor, von diesen aerodynamisch und/oder fertigungstechnisch bedingten Rotorblattverläufen abzuweichen und im Bereich der Rotorblattspitze mindestens einen Abschnitt vorzusehen, bei welchem die Rotorblattdicke und/oder die Profildicke nicht abnimmt sondern zumindest abschnittsweise zumindest konstant bleibt. Eine derartige Abweichung der Rotorblattgeometrie von einer üblichen Rotorblattgeometrie erfolgt, um einen Abschnitt vorzusehen, welcher einen größeren verfügbaren Strömungsquerschnitt erlaubt. In diesem Abschnitt kann ein Luftumlenkelement platziert werden, um erwärmte Luft im Bereich der Rotorblattspitze umzulenken.

Gemäß einem Aspekt der Erfindung kann der effektiv - für eine Luftströmung innerhalb des Rotorblattes - zur Verfügung stehende Strömungsquerschnitt in einem Abschnitt des Rotorblattes insbesondere im Bereich der Rotorblattspitze vergrößert werden, um eine Umlenkung der Luftströmung zu verbessern. Dies kann insbesondere dadurch erfolgen, dass der für die Umlenkung benötigte Raum durch die Vergrößerung des Strömungsquerschnittes ebenfalls vergrößert wird. Damit ist das zur Verfügung stehende Volumen für entsprechende Luftleitelemente ebenfalls vergrößert. Damit kann eine größere Variation der möglichen Luftleitelemente ermöglicht werden.

Zur Vergrößerung des effektiv verfügbaren Strömungsquerschnittes im Bereich der Rotorblattspitze kann entweder die Rotorblatttiefe (Profiltiefe) oder die Rotorblattdicke (Profildicke) erhöht werden. Ferner ist eine Kombination dieser beiden Maßnahmen möglich.

Zur Erhöhung des Strömungsquerschnittes kann die Rotorblatttiefe im Bereich der Rotorblattspitze erhöht werden. Dies führt zu einer Vergrößerung der Rotorblatttiefe beispielsweise bei gleicher Profilierung des Rotorblattes. Optional kann die absolute Dicke des Rotorblattes im Vergleich zu dem Rotorblatt gemäß dem Stand der Technik erhöht werden.

Zur Vergrößerung des Strömungsquerschnittes kann die Profildicke im Bereich der Rotorblattspitze erhöht werden. Hierbei kann die Rotorblatttiefe (wie bei Rotorblättern gemäß dem Stand der Technik) klein bleiben, während die absolute Dicke des Rotorblattes erhöht wird.

Optional kann sowohl die Rotorblatttiefe als auch die relative Dicke des Rotorblattprofils erhöht werden, um den Strömungsquerschnitt zu vergrößern. Dies kann insbesondere zu einer erheblichen Erhöhung des zur Verfügung stehenden Strömungsquerschnitts führen.

Hierbei kann durch die Verwendung dickerer Profile und einer gleichzeitig erhöhten Blatttiefe im Bereich der Rotorblattspitze der Strömungsquerschnitt vergrößert werden.

Bei den Rotorblättern, bei denen die gesamte Blattspitze modifiziert wird (siehe z. B. Fig. 3a,3b und 3c, Fig. 4a, 4b und 4c, Fig. 5a und 5b), können optional die Umlenkabschnitte eine maximale Länge von bis zu 30% der Rotorblattlänge oder 15% des Rotordurchmessers aufweisen. Diese Rotorblätter können optional eine Trennstelle aufweisen.

Bei der Variante mit der lokalen Aufdickung oder dem lokalen Tiefensprung (Fig. 6b) kann der Umlenkbereich optional eine Längenausdehnung von maximal 10% der Blattlänge haben.

### Bezuqszeichenliste

- 100: Windenergieanlage
- 102: Turm
- 104: Gondel
- 106: Rotor
- 110: Spinner
- 200: Rotorblätter
- 201: Länge
- 201a: Länge
- 201b: Länge
- 201c: Länge
- 201d: Länge
- 201e: Länge
- 201f: Länge
- 201g: Länge
- 202: Umlenkabschnitt
- 210: Rotorblattwurzel
- 220: Rotorblattspitze
- 230: Vorderkante
- 240: Hinterkante
- 250: Druckseite
- 260: Saugseite
- 270: Rotorblatttiefe
- 280: Rotorblattdicke
- 290: Profildicke
- 300: Rotorblattheizung
- 400: Luftführung
- 410: Steg
- 411: Steg
- 412: Steg
- 500: Luftumkehrabschnitt
- L: Längsrichtung

## Patentansprüche

1. Windenergieanlagen-Rotorblatt (200), mit
einer Länge (201)
einer Rotorblattwurzel (210),
einer Rotorblattspitze (220),
einer Druckseite (250),
einer Saugseite (260),
einer Vorderkante (230),
einer Hinterkante (240),
einer Rotorblatttiefe (270),
einer Rotorblattdicke (280),
einer Luftführung (400) für erwärmte Luft zum Führen von erwärmter Luft entlang einer Längsrichtung (L) des Rotorblattes (200) von der Rotorblattwurzel (210) in Richtung der Rotorblattspitze (220), und
einem Umlenkabschnitt (500), der im Bereich der Rotorblattspitze (202) angeordnet ist und eine Querschnittsfläche aufweist, die zumindest abschnittsweise zur Rotorblattspitze (220) hin zumindest konstant ist oder die sich zumindest abschnittsweise zur Rotorblattspitze (220) hin vergrößert.

2. Windenergieanlagen-Rotorblatt (200) nach Anspruch 1, wobei
die Luftführung (400) mindestens einen Steg (410) aufweist, welcher zwischen der Druckseite (250) und der Saugseite (260) angeordnet ist und sich entlang der Längsrichtung (L) des Rotorblattes (200) erstreckt, wobei eine Umlenkeinheit (500) im Bereich der Rotorblattspitze (220) vorgesehen ist.

3. Windenergieanlagen-Rotorblatt (200) nach Anspruch 1 oder 2, wobei
im Bereich des Umlenkabschnitts (500) die Rotorblattdicke (280) und/oder die Rotorblatttiefe (270) mit zunehmender Länge (201) des Rotorblattes (200) konstant ist oder sich vergrößert.

4. Windenergieanlagen-Rotorblatt (200) nach einem der Ansprüche 1 bis 3, ferner mit
mindestens einem Abschnitt (201a) mit vergrößertem Querschnitt zwischen der Rotorblattwurzel (210) und der Rotorblattspitze (220).

5. Windenergieanlagen-Rotorblatt (200) nach Anspruch 4, wobei
der Abschnitt (201a) mit vergrößertem Querschnitt eine Länge von bis zu 10% der Länge des Rotorblattes (200) aufweist.

6. Windenergieanlagen-Rotorblatt (200) nach einem der Ansprüche 1 bis 4, wobei
der Bereich der Rotorblattspitze (202) ein äußerer Bereich des Rotorblattes (200) mit einer Länge von 10 bis 30 % der Länge des Rotorblattes vorgesehen ist.

7. Windenergieanlagen-Rotorblatt (200) nach einem der Ansprüche 1 bis 6, wobei
eine Länge des Umlenkabschnittes (500) bis zu 30 % der Länge des Rotorblattes oder bis zu 15 % des Rotordurchmessers beträgt.

8. Windenergieanlage mit mindestens einem Windenergieanlagen-Rotorblatt nach einem der Ansprüche 1 bis 7.
